# EUROPÄISCHE PATENTSCHRIFT

(11) **EP 1 038 223 B1**
(45) Veröffentlichungstag und Bekanntmachung des Hinweises auf die Patenterteilung: **03.04.2002**
(21) Anmeldenummer: 98966199.6
(22) Anmeldetag: 07.12.1998
(51) Int. Cl.: G06F 11/10, G11C 17/16

(54) **ÜBERWACHUNGSSYSTEM FÜR EINE DIGITALE TRIMZELLE**
MONITORING SYSTEM FOR A DIGITAL TRIMMING CELL
SYSTEME DE SURVEILLANCE POUR UNE CELLULE D'AJUSTAGE

(30) Priorität: 12.12.1997 DE 19755384
(43) Veröffentlichungstag der Anmeldung: 27.09.2000
(73) Patentinhaber: Infineon Technologies AG, 81669 München (DE)
(72) Erfinder: DRAXELMAYR, Dieter, A-9500 Villach (AT)
(74) Vertreter: Zedlitz, Peter, Dipl.-Inf.
(86) Internationale Anmeldenummer: DE9803587
(87) Internationale Veröffentlichungsnummer: WO9931585

(56) Entgegenhaltungen:
- EP-A- 0 305 987
- US-A- 4 773 046
- US-A- 5 384 746
- DE WIT M ET AL: "A LOW-POWER 12-B ANALOG-TO-DIGITAL CONVERTER WITH ON-CHIP PRECISION TRIMMING" IEICE TRANSACTIONS ON ELECTRONICS, Bd. E76-C, Nr. 5, 1. Mai 1993, Seiten 795-801, XP000381121

## Beschreibung

Die vorliegende Erfindung betrifft ein Überwachungssystem zum Trimmen elektronischer Bauelemente oder Sensoren gemäß Oberbegriff des Anspruches 1.

Bei manchen elektronischen Bauelementen und Sensoren ist es erforderlich eine Einstellung der Bauelemente bzw. Sensoren durchzuführen, damit die geforderte Genauigkeit erreicht wird. Dieser Einstellungsablauf wird üblicherweise als Trimmen des entsprechenden Bauelementes bzw. Sensors genannt.

Zu diesem Zweck ist es bekannt, digitale Trimmzellen, z.B. als EEPROM-Zellen, Zener-Zaps oder Fusible Links zu verwenden. Mittels dieser üblicherweise digitalen Trimmzellen kann dann das entsprechende elektronische Bauelement bzw. der Sensor und die damit verbundene Schaltung so gesteuert werden, daß ein gewünschtes Übertragungsverhalten erreicht wird.

Gerade im Hinblick auf sicherheitsrelevante elektronische Systeme ist es ein Problem, dieses Trimmen der entsprechenden Bauelemente mit hoher Zuverlässigkeit zu erreichen. Dies deshalb, da gerade in sensiblen elektronischen Systemen das erforderliche Übertragungsverhalten von Bauelementen sichergestellt sein muß und somit auch die Zuverlässigkeit bei der Trimmung dieser Bauelemente.
In dieser Hinsicht hat man aber auch festgestellt, daß die eingesetzten Trimmzellen serienbedingt ausgefallen sind oder im Laufe ihrer Lebensdauer gekippt sind, wobei hierfür jedoch keine eindeutige Anzeige eines Fehlverhaltens des gesamten Systems erhalten wurde.
Derartige Ausfälle oder Fehlfunktionen, die zu dem nicht eindeutig angezeigt werden, können jedoch gerade in sicherheitsrelevanten Systemen nicht akzeptiert werden.

Aufgabe der Erfindung ist es daher, ein Überwachungssystem der gattungsgemäßen Art so auszubilden, daß zuverlässig das Funktionieren der Trimmzellen bzw. ein Abweichen davon oder sogar ein Ausfall von Trimmzellen angezeigt wird.

Diese Aufgabe wird erfindungsgemäß bei einem gattungsgemäßen Überwachungssystem durch die Merkmale des kennzeichnenden Teils des Anspruches 1 gelöst.

Ein wesentlicher Kerngedanke der Erfindung liegt daher darin, der oder den bereits im System vorhandenen Trimmzellen eine weitere Trimmzelle zuzuordnen. Diese weitere Trimmzelle ist dann so ausgelegt bzw. geschaltet, daß vom Überwachungssystem ein Paritäts-Signal erzeugt wird, welches eine Aussage über das Funktionieren oder einen Ausfall von einer oder mehreren Trimmzellen im System zuläßt.

In vorteilhafter Weise wird hierbei die weitere digitale Trimmzelle parallel zu den anderen Trimmzellen, deren Funktionsüberwachung im System durchgeführt werden soll, geschaltet.
Die digitale Funktionsweise der üblicherweise eingesetzten Trimmzellen gestattet es daher die Ausgangssignale der Trimmzellen logisch miteinander zu verknüpfen, so daß ein Ausgangssignal für die Paritätsprüfung erlangt wird.
Zu diesem Zweck werden die Ausgangssignale der Trimmzellen direkt oder indirekt einer Logikschaltung zugeführt, die z.B. nur dann, wenn ein Fehlverhalten einer oder mehrerer Trimmzellen vorliegt, ein Paritäts-Signal an ihrem Ausgang erzeugt.

Obwohl ein Paritäts-Signal im Prinzip nur beim Ausfall einer oder einer ungeraden Anzahl von Trimmzellen ansteht, erfüllt dies die hohen Sicherheitsanforderungen, da bereits beim Ausfall einer einzigen Trimmzelle der Fehler angezeigt werden soll.

Als Trimmzellen für das Einstellen des gewünschten Übertragungsverhaltens von Sensoren können beispielsweise EEPROM- oder EPROM-Zellen, Zener-Zaps oder Fusible Links eingesetzt werden.

Bei digitaler Verarbeitung kann ein Fehler einer Trimmzelle durch ein Status-Bit am Ausgang der Logikschaltung angezeigt werden.

Da in häufigen Fällen die vorgesehenen Schnittstellen nur das Sensorsignal übertragen können ist es erforderlich, den Fehlerzustand als Paritäts-Signal in anderer weise anzuzeigen.
Eine einfache und zweckmäßige Möglichkeit besteht in diesen Fällen darin, daß das Paritäts-Signal aus dem normalen Betriebsbereich der Anzeige herausgelegt wird, also außerhalb des Normalbereiches liegt.

Zum Beispiel kann bei einem integrierten Drucksensor, an dessen Ausgang im Normalbetrieb digitale Daten im Bereich +/- 0,75 als Ausgangssignale erzeugt werden, eine Fehlfunktion der Trimmzellen mit einem Endanschlag bei z.B. +/- 1 anzeigt werden.

Das Überwachungssystem kann hierdurch so ausgelegt und definiert werden, daß Daten, die außerhalb des Normbereiches liegen, ein Fehlverhalten, insbesondere der Trimmzellen oder einer Trimmzelle signalisiert. Es kann daher bei einem vorliegenden Fehler einfach der Bereichsendwert des entsprechenden Sensors ausgegeben werden. Auf diese Weise wird mit hoher Zuverlässigkeit auf das irreguläre Verhalten von Trimmzellen und Sensor aufmerksam gemacht. Letzteres dadurch, da beim Fehlverhalten von Trimmzellen der oder die Sensoren nicht im Rahmen ihres gewünschten Übertragungsverhalten liegen.

Obwohl man von einer guten Zuverlässigkeit bei Trimmzellen ausgehen kann, wird durch den Aufbau des Überwachungssystems in der vorausgehend genannten Weise in einfacher und effizienter Form ein Fehler des Systems angezeigt und somit die Gesamtzuverlässigkeit erheblich verbessert.

Die Erfindung wird nachstehend anhand einer schematischen Zeichnung eines Ausführungsbeispieles noch näher erläutert.

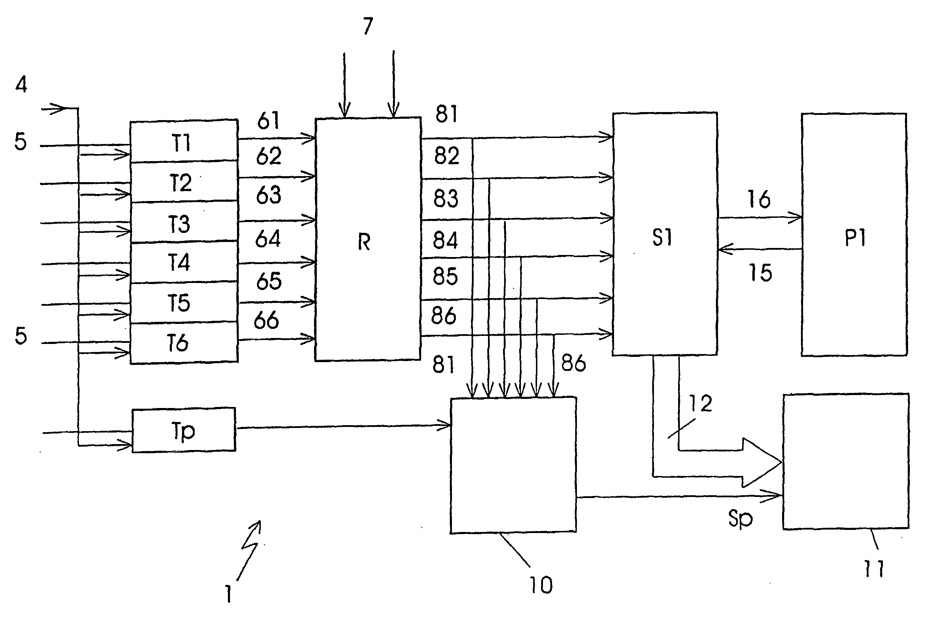

Die Zeichnung zeigt ein schematisches Blockschaltbild eines erfindungsgemäßen Überwachungssystems 1 mit einem Sensor S1. Zur Einstellung der Genauigkeit und des Übertragungsverhaltens hat der Sensor S1 sechs Bit-Eingänge, über die der Sensor S1 trimmbar ist.

Die Trimmzellen T1 bis T6 erhalten eingangsseitig ein gemeinsames Steuersignal 4 und weiterhin separat unterschiedliche Eingangssignale 5.

Ausgangsseitig werden die Signale 61 bis 66 der Trimmzellen auf ein Register R geführt. Die Ausgangssignale 81 bis 86 des Registers R dienen dann als Eingangssignale zur Einstellung des Übertragungsverhaltens des Sensors S1.

Das Register R dient insbesondere dazu, das Verhalten des Sensors S1 beim Ausfall einer oder mehrerer Trimmzellen T1 bis T6 simulieren zu können. Hierdurch ist es möglich, das Register R so zu setzen, daß z.B. der Ausfall der Trimmzelle T3 testweise durchgespielt werden kann und das Übertragungsverhalten des Sensors S1 bereits testmäßig feststellbar ist. Das Register R dient aber auch dazu, die genaue Sollfunktion des Sensors S1 zu ermitteln, ohne daß Trimmzellen z.B. Fusible Links "geschossen" werden müssen.
Die Ausgangssignale 81 bis 86 des Registers R sind sozusagen Bit-Leitungen zur Einstellung des Sensors S1. Der Sensor S1 wird daher über sechs Bit-Leitungen in seinem Übertragungsverhalten bzw. seiner Genauigkeit eingestellt.

Im dargestellten Beispiel steht der Sensor S1 in bidirektionaler Verbindung mit einer Prozeßeinheit P1.
Der Sensor S1 kann z.B. ein Drucksensor KP 100 sein, der in bidirektionaler Wirkungsweise den Druck an der entsprechenden Prozeßeinheit P1 erfaßt.

Um höchstmögliche Sicherheit und Zuverlässigkeit des Überwachungssystems zu erreichen, ist eine weitere Trimmzelle Tp als Paritäts-Trimmzelle parallel zu den im Beispiel vorhandenen sechs Trimmzellen T1 bis T6 vorgesehen.

Das Ausgangssignal dieser Paritäts-Trimmzelle Tp wird einem Logikblock 10 zugeführt, der gleichzeitig die Ausgangssignale 81 bis 86 erhält, die die Funktionsfähigkeit bzw. Fehlverhalten oder sogar einen Ausfall einzelner oder mehrerer Trimmzellen T1 bis T6 kennzeichnen.

Im Logikblock 10 werden diese Signale einschließlich des Ausgangssignals der weiteren Trimmzelle Tp verarbeitet und z.B. im Falle eines Fehlers einer der Trimmzellen T1 bis T6 ein Paritäts-Signal Sp am Ausgang abgegeben.

Dieses Paritäts-Signal Sp wird über eine Display-Einheit 11 angezeigt.
Zweckmäßigerweise wird das Paritätssignal Sp auch dem Sensor S1 zugeführt, z.B. im Sinne eines Blockierungssignals, da er fehlerbehaftet eingestellt ist.

Die Display-Anzeige 11 steht über einen Bus 12 mit dem Sensor S1 in Verbindung, so daß die entsprechenden Sensorwerte angezeigt werden können.
Im Falle eines vom Logikblock 10 erzeugten Paritäts-Signales Sp kann die Anzeige des entsprechenden Sensorsignales als Kennzeichnung für einen Fehler in den Endbereich der Anzeige gelegt werden, womit eindeutig ein Fehler im Überwachungssystem signalisiert wird.

## Patentansprüche

1. Überwachungssystem zum Trimmen elektronischer Bauelemente oder Sensoren, wobei jedem Bauelement oder Sensor (S1) mindestens eine digitale Trimmzelle (T1 bis T6) zur Regelung der Einstellung des Bauelements oder des Sensors zugeordnet ist,
**dadurch gekennzeichnet,**
**daß** eine weitere digitale Trimmzelle (Tp) der oder den Trimmzellen (T1 bis T6) zu deren Funktionsüberwachung im System zugeordnet ist, und
**daß** die weitere digitale Trimmzelle (Tp) zur Paritätsprüfung für die oder mit den anderen Trimmzellen (T1 bis T6) ausgelegt ist.

2. Überwachungssystem nach Anspruch 1,
**dadurch gekennzeichnet,**
**daß** die weitere digitale Trimmzelle (Tp) parallel zu der oder den Trimmzellen (T1 bis T6) geschaltet ist, und
**daß** die Ausgangssignale (81 bis 86) der Trimmzellen (T1 bis T6) einer Logikschaltung (10) zugeführt sind, die ein Signal (Sp) zur Paritätsprüfung erzeugt.

3. Überwachungssystem nach Anspruch 1 oder 2,
**dadurch gekennzeichnet,**
**daß** die Trimmzellen (T1 bis T6) als EPROM-Zellen, EEPROM-Zellen, Zener-Zaps oder Fusible-Links ausgebildet sind.

4. Überwachungssystem nach einem der Ansprüche 2 oder 3,
**dadurch gekennzeichnet,**
**daß** das Signal (Sp) zur Paritätsprüfung auf einen Fehler einer oder mehrerer Trimmzellen (T1 bis T6) ein Status-Bit ist.

5. Überwachungssystem nach einem der Ansprüche 1 bis 3,
**dadurch gekennzeichnet,**
**daß** das Signal (Sp) zur Paritätsprüfung eine Anzeige außerhalb des Anzeigebereichs des Normalbetriebes des entsprechenden Bauelements oder Sensors (S1) ist.

6. Überwachungssystem nach Anspruch 5,
**dadurch gekennzeichnet,**
**daß** die Anzeige eines Fehlers als Datum des Endanschlages des Anzeigenbereiches angezeigt ist.

7. Überwachungssystem nach einem der Ansprüche 1 bis 6,
**dadurch gekennzeichnet,**
**daß** zwischen Trimmzellen (T1 bis T6) und Sensor(en) (S1) mindestens ein Speicher oder Register (R) zwischengeschaltet ist, der bzw. das eine Simulation eines Ausfalles einer oder mehrerer Trimmzellen (T1 bis T6) ermöglicht.

8. Überwachungssystem nach Anspruch 7,
**dadurch gekennzeichnet,**
**daß** mittels des Speichers oder Registers (R), ohne Einbeziehung der Trimmzellen (T1 bis T6), die genaue Sollfunktion des Sensors (S1) bestimmbar ist.

## Claims

1. Monitoring system for trimming electronic components or sensors, each component or sensor (S1) being assigned at least one digital trimming cell (T1 to T6) for regulating the setting of the components or of the sensor,
**characterized**
**in that** a further digital trimming cell (Tp) is assigned to the trimming cell or cells (T1 to T6) for the functional monitoring thereof in the system, and
**in that** the further digital trimming cell (Tp) is designed for parity checking for the or with the other trimming cells (T1 to T6).

2. Monitoring system according to Claim 1,
**characterized**
**in that** the further digital trimming cell (Tp) is connected in parallel with the trimming cell or cells (T1 to T6), and
**in that** the output signals (81 to 86) of the trimming cells (T1 to T6) are fed to a logic circuit (10), which generates a signal (Sp) for parity setting.

3. Monitoring system according to Claim 1 or 2,
**characterized**
**in that** the trimming cells (T1 to T6) are designed as EPROM cells, EEPROM cells, zener zaps or fusible links.

4. Monitoring system according to either of Claims 2 and 3,
**characterized**
**in that** the signal (Sp) for parity checking with regard to a fault in one or more trimming cells (T1 to T6) is a status bit.

5. Monitoring system according to one of Claims 1 to 3,
**characterized**
**in that** the signal (Sp) for parity checking is an indication outside the indicating range of the normal operation of the corresponding component or sensor (S1).

6. Monitoring system according to Claim 5,
**characterized**
**in that** the indication of a fault is indicated as datum of the full-scale stop of the indicating range.

7. Monitoring system according to one of Claims 1 to 6,
**characterized**
**in that** at least one storage device or register (R) is interposed between trimming cells (T1 to T6) and sensor(s) (S1), which allows a simulation of a failure of one or more trimming cells (T1 to T6).

8. Monitoring system according to Claim 7,
**characterized**
**in that** the exact desired function of the sensor (S1) can be determined by means of the storage device or register (R), without the inclusion of the trimming cells (T1 to T6).

## Revendications

1. Système de surveillance pour l'ajustage de composants électroniques ou de capteurs, au moins une cellule (T1 à T6) numérique d'ajustage étant associée à chaque composant ou capteur (S1) pour la régulation du réglage du composant ou du capteur, **caractérisé**
**en ce qu'**une autre cellule (Tp) numérique d'ajustage est associée à la cellule ou aux cellules (T1 à T6) d'ajustage pour en surveiller le fonctionnement dans le système, et
**en ce que** l'autre cellule (Tp) numérique d'ajustage est conçue pour la vérification de la parité pour l'autre cellule ou pour les autres cellules (T1 à T6) d'ajustage.

2. Système de surveillance suivant la revendication 1, **caractérisé en ce que** l'autre cellule (Tp) numérique d'ajustage est montée en parallèle à l'autre cellule ou aux autres cellules (T1 à T6) d'ajustage, et
**en ce que** les signaux (81 à 86) de sortie des cellules (T1 à T6) d'ajustage sont envoyés à un circuit (10) logique, qui produit un signal (Sp) pour la vérification de la parité.

3. Système de surveillance suivant la revendication 1 ou 2, **caractérisé en ce que** les cellules (T1 à T6) d'ajustage sont constituées en cellules EPROM, en cellules EEPROM, en Zener-zaps ou en fusible-links.

4. Système de surveillance suivant l'une des revendications 2 ou 3, **caractérisé en ce que** le signal (Sp) de vérification de la parité pour une erreur d'une cellule ou de plusieurs cellules (T1 à T6) d'ajustage, est un bit de statut.

5. Système de surveillance suivant l'une des revendications 1 à 3, **caractérisé en ce que** le signal (Sp) de vérification de la parité est une indication à l'extérieur du domaine d'indication du fonctionnement normal du composant ou du capteur (S1) correspondant.

6. Système de surveillance suivant la revendication 5, **caractérisé en ce que** l'indication d'une erreur est indiquée comme donnée de la butée d'extrémité du domaine d'indication.

7. Système de surveillance suivant l'une des revendications 1 à 6, **caractérisé en ce qu'**il est interposé entre des cellules (T1 à T6) d'ajustage et des capteurs (S1) au moins une mémoire ou un registre (R) qui permet de simuler une défaillance d'une cellule ou de plusieurs cellules (T1 à T6) d'ajustage.

8. Système de surveillance suivant la revendication 7, **caractérisé en ce que** le fonctionnement de consigne précis du capteur (S1) peut être déterminé au moyen de la mémoire ou du registre (R) sans mise en oeuvre des cellules (T1 à T6) d'ajustage.
